# EUROPÄISCHE PATENTANMELDUNG

(11) **EP 1 884 341 A2**
(43) Veröffentlichungstag der Anmeldung: **06.02.2008**
(21) Anmeldenummer: 07013446.5
(22) Anmeldetag: 10.07.2007
(51) Int. Cl.: B29C 47/54

(54) **Vorrichtung zur Herstellung von strangförmigen Gütern**

(30) Priorität: 02.08.2006 DE 102006035960
(71) Anmelder: BIOTRONIK VI Patent AG, 6341 Baar (CH)
(72) Erfinder: Gielenz, Gerhard, 8620 Wetzikon (CH)
(74) Vertreter: Lindner-Vogt, Karin L.

(57) **Zusammenfassung**

Zur Herstellung von strangförmigen Gütern aus thermoplastischen oder elastomeren Werkstoffen wird ein Pastenextruder mit einem speziell ausgebildeten Innenvolumen vorgeschlagen, der durch einen zylinderförmigen Innendorn (2) und einen äußeren Zylindermantel (1) definiert wird. Im Innenvolumen wird der polymere Werkstoff (z.B. PE, PA, TPU und andere geeignete thermoplastischen Polymere und Elastomere) eingefüllt. Das polymere Rohmaterial kann beispielsweise als Pulver oder Granulat oder auch als Material-Kerze, die in einem separaten Vorprozess mit der der gleichen erfindungsgemäßen Vorrichtung hergestellt wird, vorliegen. Durch Beheizung wird die Polymermasse aufgeschmolzen und mittels eines Ausschiebekolbens (3) ausgepresst. Im Austrittsbereich ist eine statische Mischstrecke (5) vorgesehen, bei der durch spezielle Formgebung eine Durchdringung des Schmelzeflusses erfolgt und so eine gleichmäßige Durchmischung des Schmelzeguts erreicht wird. Damit wird ein homogener Materialstrom erreicht, der über einen Schmelzekanal einem konventionellen Längs- oder Quer-Spritzkopf (4) zugeführt wird.

## Beschreibung

Die Erfindung betrifft Vorrichtungen zur Herstellung von strangförmigen Gütern aus polymeren Werkstoffen.

"Strangförmige Güter" im Sinne der vorliegenden Erfindung sind beliebig lang gestreckte, wickelbare oder in gestreckter Länge als Hohl- oder Vollprofil ausgeformte Extrudate mit einer hochpräzisen Querschnittsgeometrie. Typische Produkte gemäß dieser Definition sind dünnwandig isolierte elektrische Adern, dünnwandige ein- oder mehrlumige Mikroschläuche, Vollrundschnüre, aber auch beliebig andere denkbaren miniaturisierten Profile z.B. für Dichtungszwecke im Gerätebau, für Montage und Verpackungen als Abstandhalter und vieles mehr.

Insbesondere betrifft die Erfindung Vorrichtungen zur Herstellung von hochpräzisen, dünnwandigen, polymeren Mikroschläuchen und Mikroprofilen, die für einen Einsatz im medizinischen Bereich geeignet sind.

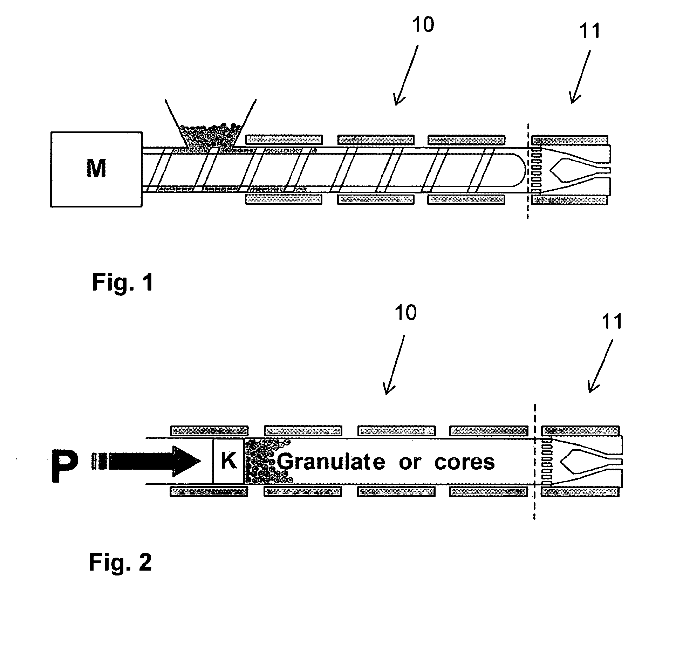

Zur Herstellung von strangförmigen Gütern aus Polymeren werden üblicherweise konventionelle Extruder eingesetzt. Die Figuren 1 und 2 zeigen zwei Ausführungsbeispiele bekannter Extruderbauarten mit angesetztem konventionellem Formgebungswerkzeug (11). In üblicher Ausführung besteht ein konventioneller Extruder (10) aus einer beheizbaren zylindrischen Aufnahme, in die über den Trichtereinzug Polymer-Material beispielsweise als Granulat eingefüllt wird. Durch Erwärmung wird dann das Material geschmolzen und über einen Schnecken-Vortrieb (Ein-Schnecken-Extruder) oder einen Kolben (Pasten-, Kolben- oder RAM-Extruder) über einen am Extruderauslass angeflanschten Spritzkopf (11) zur Formgebung der viskosen Polymermasse zugeführt.

Bei der Extrusion von strangfömigen Gütern, insbesondere dünnwandigen Polymer-Schläuchen, sind besondere Vorkehrungen zu treffen, die wiederum einen relativ kostenintensiven Rüst- und Einstellaufwand bedeuten. Bereits geringfügige Schwankungen im Materialtransport beim Formgebungsprozess, hervorgerufen beispielsweise durch Druckschwankungen infolge z.B. von Einzugsproblemen oder einer nicht optimal auf das Material ausgelegten Schnecken- und/oder Einzugsgeometrie, führen wegen der sehr kleinen Fördermengen zwangsläufig zu Abweichungen in der gewünschten Wandungsstärke und damit zu einer unerwünschten Veränderung der geometrischen und mechanischen Eigenschaften des Extrudates. Bei konventionellen Extrudern entstehen zudem aufgrund des notwendigen, meist nur sehr geringen Ausstoßvolumens auch zu lange Verweilzeiten des Polymers im Extruder-Innenbereich, was zu einer thermischen Vorschädigung des polymeren Werkstoffs führen kann.

Insbesondere im Bereich der Medizintechnik sind die Qualitätsanforderungen sehr hoch, so dass bei herkömmlichen Extrudern zusätzliche Vorkehrungen getroffen werden müssen, um die engen Spezifikationen einzuhalten. Eine entsprechend aufwändige Vorrichtung zur Herstellung von dünnwandigen Polymerschläuchen für medizinische Anwendungen ist beschrieben in der US-Patentschrift 6,814,561. Bei diesem Extruder wird das Schmelzegut (PTFE, ePTFE) durch einen Kolben ausgepresst, der über einen speziell ausgebildeten Mechanismus geführt wird. Dabei sind verschiedene Führungselemente vorgesehen, die dafür sorgen, dass ein zentraler Führungsstab (guide rod) während des Vortriebs stets in präziser axialer Ausrichtung verbleibt.

Die Erfindung geht aus von dieser Schrift als nächstliegendem Stand der Technik. Aufgabe der Erfindung ist es, eine alternative Vorrichtung zur Herstellung von beliebigen strangförmigen Gütern anzugeben, die eine hohe Präzision der Extrudate bei gleichzeitiger einfacher Handhabung des Prozesses gewährleistet.

Diese Aufgabe wird bei einem Extruder gemäß Oberbegriff des Anspruchs 1 gelöst durch die Merkmale des charakterisierenden Teils des Anspruchs 1. Weitere Details unterschiedlicher Ausführungsformen und Vorzüge der Erfindung sind Gegenstand der Unteransprüche.

Zur Herstellung von strangförmigen Gütern aus thermoplastischen oder elastomeren Werkstoffen wird erfindungsgemäß ein Pastenextruder mit einem speziell ausgebildeten Innenvolumen vorgeschlagen, der durch einen zylinderförmigen Innendorn und einen äußeren Zylindermantel, vorzugsweise mit kreisförmigem Querschnitt definiert wird. Im Innenvolumen wird der polymere Werkstoff (z.B. PE, PA, TPU oder andere geeignete thermoplastischen Polymere und Elastomere) eingefüllt. Das polymere Rohmaterial kann beispielsweise als Pulver oder Granulat vorliegen. Grundsätzlich sind aber auch andere Querschnittsformen zur Ausgestaltung des Innenvolumens wie z.B. eine Ellipse oder ein reguläres oder nicht reguläres N-Eck mit N ≥ 3 denkbar.

In einer alternativen Verwendung kann die Vorrichtung zur Herstellung von rohrförmigen (oder anders gestalteten) Material-Kerzen aus diesem Pulver oder Granulat verwendet werden. Solche Kerzen gewährleisten eine schnellere und effizientere Handhabung des polymeren Werkstoffes bei der Extrusion des strangförmigen Gutes.

In einer erweiterten Ausführungsform des erfindungsgemäßen Extruders ist für den Außenzylinder ein Vakuumflansch vorgesehen, über den mittels ölfreier Pumpe nach dem Befüllen mit Polymer-Rohmasse die Luft im Füllvolumen abgepumpt werden kann.

Durch Beheizung wird die Polymermasse aufgeschmolzen und über eine hydraulische, elektrische oder pneumatische Antriebseinheit wird dann das Schmelzegut mittels eines Ausschiebekolbens ausgepresst. Hierbei wird der Kolbenweg über entsprechende Wegaufnehmer erfasst. Im Austragsbereich ist eine - vorzugsweise ebenfalls beheizte - Mischstrecke vorgesehen, bei der durch spezielle Formgebung eine Durchdringung des Schmelzeflusses im Sinne eines statischen Mischteils erfolgt und so eine gleichmäßige Durchmischung des Schmelzeguts erreicht wird.

Im anschließenden Übergangsbereich vom Extruder zum formgebenden Teil (Spritzkopf) sind Mittel zur Erfassung von Temperatur und Druck der Schmelzemasse vorgesehen. Das erhaltene Drucksignal wird über Steuereinrichtungen in Verbindung mit dem Wegsignal zur verzögerungsfreien Regelung des Kolbenvortriebs im Sinne einer Druck-Weg-Regelung eingesetzt. Damit ist ein schwankungsfreier Materialstrom erreichbar, der über einen Schmelzekanal und beheizten Flanschverbindungen einem konventionellen Längs- oder QuerSpritzkopf, vorzugsweise mit manueller Feinzentrierung, zugeführt werden kann.

Da die Materialmengen für Mikroschläuche sehr klein sind, sind die freien Volumina des Schmelzekanals und im Spritzkopf weitestgehend minimiert (MikroSpritzkopf). Damit können mögliche rheologisch bedingte Fliessanomalien, wie z.B. Kompressions- oder "Slip-Stick"-Effekte so reduziert werden, dass die Schmelze aus der Bügelzone des Schlauchwerkzeugs praktisch pulsationsfrei austreten kann und für die resultierende Geometrie des Extrudates somit nur die Strangaufweitung als Funktion des Massedrucks und der Abzuggeschwindigkeit berücksichtigt werden muss.

Nachgeschaltet ist eine konventionelle Kühl-, Kalibrier - und Abzugseinheit inklusive Schneidvorrichtung, die in ihren Dimensionen an die kleinen Extrudat-Durchmesser angepasst sind.

Die Erfindung wird im Folgenden anhand eines bevorzugten Ausführungsbeispiels unter Bezugnahme auf die Figuren und den darin angegebenen Bezugszeichen näher erläutert.

### Es zeigen:

- Figur 1: Konventioneller Ein-Schnecken Extruder mit einem konventionellen Spritzkopf als Formgebungswerkzeug
- Figur 2: Konventioneller Kolben-Extruder mit einem konventionellen Spritzkopf als Formgebungswerkzeug
- Figur 3: Übersicht Aufbau eines Ausführungsbeispiels des erfindungsgemäßen Extruders
- Figur 4: Perspektivansicht des zylindrischen Innendorns des Extruders
- Figur 5: Aufsicht Innendorn mit Maßangaben
- Figur 6: Perspektivansicht rohrförmiger Ausschiebekolben
- Figur 7: Schemaskizze Ausschiebekolben mit Maßangaben
- Figur 8: Perspektivansicht Außenzylinder
- Figur 9: Außenzylinder in Halbschalen-Darstellung
- Figur 10: Aufsicht Außenzylinder mit Maßangaben
- Figur 11: Perspektivansicht zerlegter Extruder in koaxialer Anordnung der Einzelelemente
- Figur 12: Modularer Aufbau für Parallelbetrieb

Die Figuren 1 und 2 zeigen zum Vergleich bekannte Extruder (10) konventioneller Bauweise mit Schnecken- bzw. Kolbenmechanismus, angeflanschtem Formgebungsteil (11) und mit entsprechend gestalteten Heizelementen für eine mehrstufige Zonenbeheizung des Prozessvolumens.

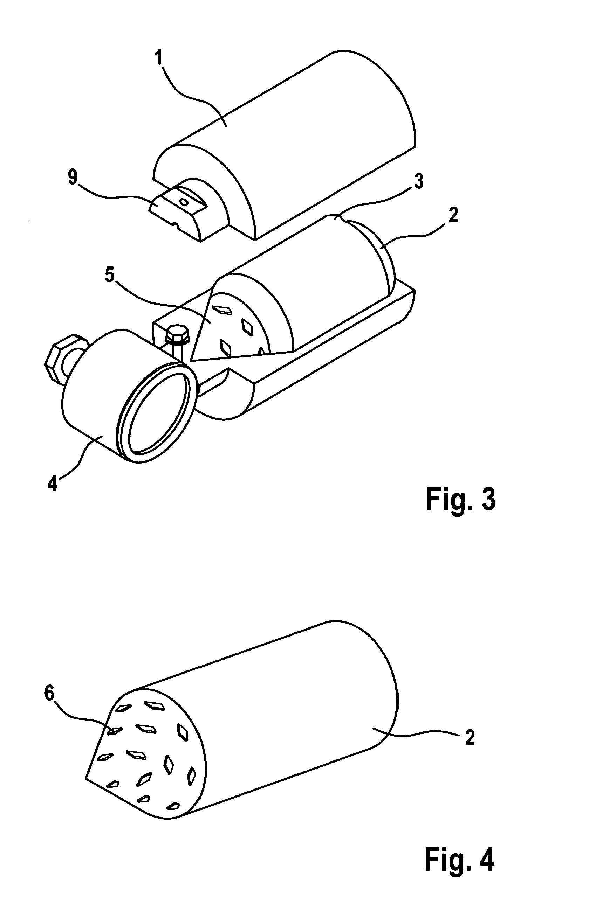

Figur 3 zeigt schematisch ein Ausführungsbeispiel des erfindungsgemäßen Extruders mit geöffnetem Außenzylinder (1), zylinderförmigem Innendorn (2), rohrförmigem Ausschiebekolben (3) und Mikro-Querspritzkopf (4). Diese Komponenten sind in ihren Bemaßungen und Füllvolumina aufeinander abgestimmt. Vorzugsweise sind die Materialien der Oberflächen von Außenzylinder (1), Innendorn (2) und Ausschiebekolben (3) für optimale mechanische Stabilität bzgl. Gleitverhalten und Abriebfestigkeit ausgewählt. Hierzu können die Oberflächen der Extruderelemente beispielsweise eine spezielle verschleiß- bzw. haftungsreduzierende Beschichtung, z.B. aus Titannitrit aufweisen.

Je nach gewünschtem Querschnittsprofil des Extrudates kann der Extruder zusammen mit beliebigen konventionellen Längs- oder Querspritzköpfen, vorzugsweise mit sehr kurzen und volumenreduzierten Fliesswegen (Mikrospritzkopf), und mit entsprechend ausgestalteten Formgebungswerkzeugen eingesetzt werden.

In Figur 4 ist der Innendorn (2) wiedergegeben. Im Innendorn sind mehrere Heizelemente, z.B. Hochleistungsheizpatronen, formschlüssig befestigt (nicht dargestellt). Vorzugsweise können die Heizelemente des Innendorns individuell angesteuert werden. Ebenfalls im Innenbereich des Innendorns sind Thermosensoren angebracht, die die aktuelle Temperaturverteilung erfassen. Mittels entsprechender Regelung der verteilten Heizelemente kann so eine optimal homogene Wärmeverteilung eingestellt und aufrechterhalten werden.

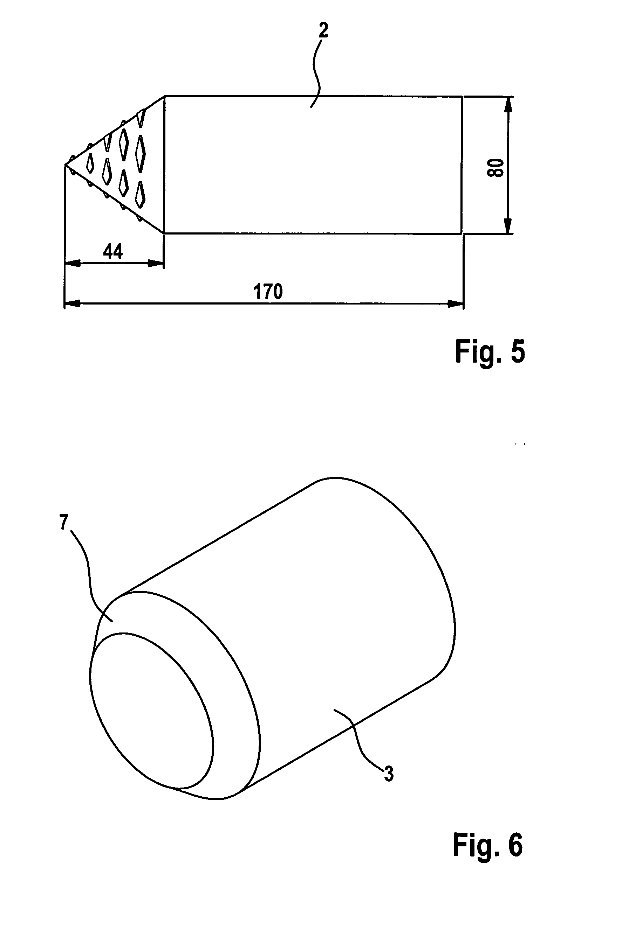

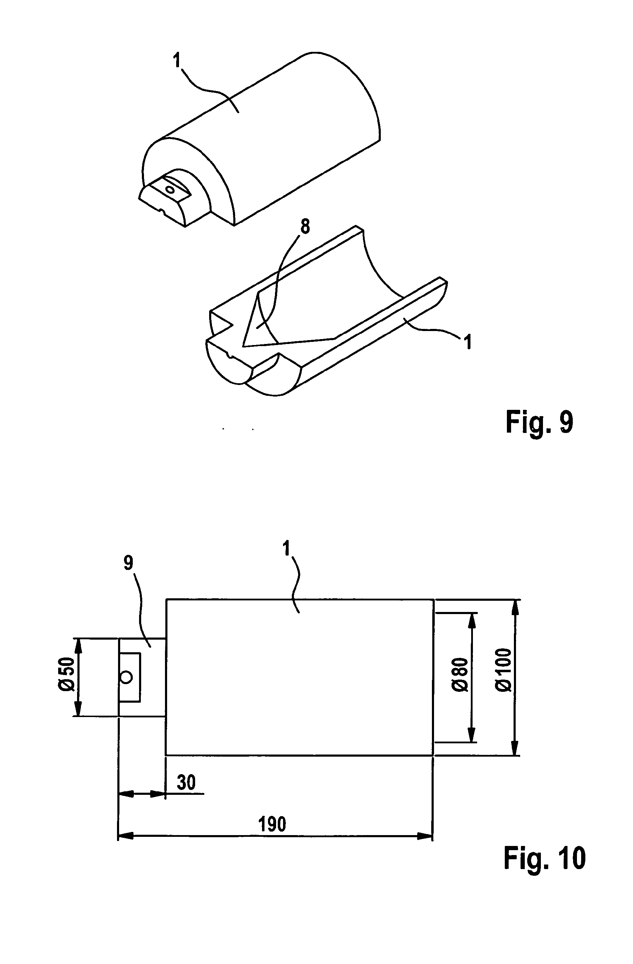

In der bevorzugten Ausführungsform weist der Innendorn im Auslassbereich eine konische Verjüngung (5) auf, der zugehörige Außenzylinder (1) weist als Gegenstück eine entsprechend zulaufende Form (8) in diesem Bereich gemäß Figur 9 auf. In diesem konischen Bereich können zusätzliche Oberflächenstrukturen (6) eingebracht werden, die für eine gleichmäßige Durchmischung der Schmelze während des Ausströmens sorgen. Vorzugsweise sind die Oberflächenstrukturen (6) rautenförmig ausgestaltet. Figur 5 zeigt den Innendorn in Aufsicht mit typischen Maßangaben in Millimetern als mögliches Ausführungsbeispiel.

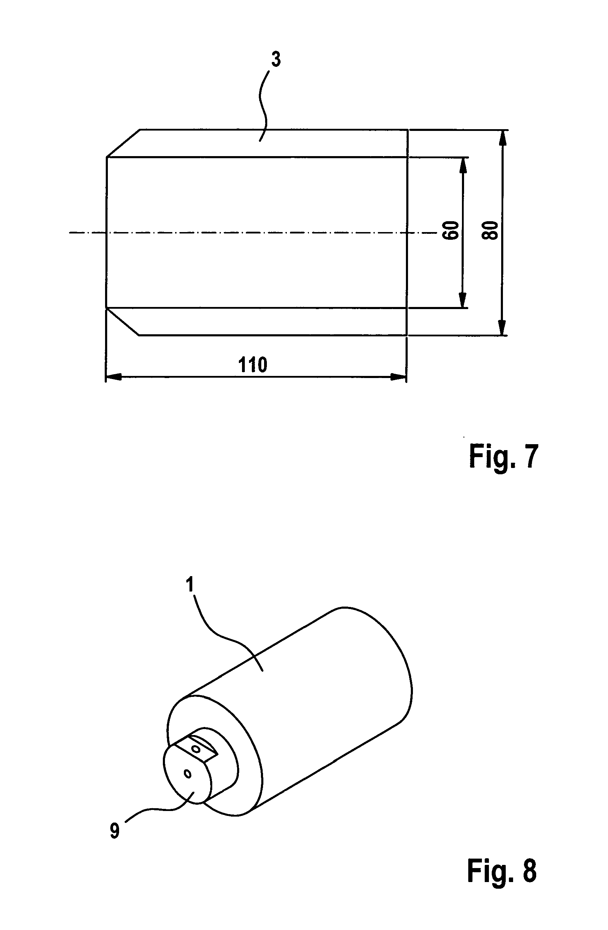

In Figur 6 ist der rohrförmige Ausschiebekolben (3) perspektivisch dargestellt. Der Innendurchmesser des Ausschiebekolbens (3) ist auf den Querschnitt des Innendorns abgestimmt, so dass im beheizten Zustand ein möglichst widerstandsfreies Gleiten bei gleichzeitig möglichst geringem Zwischenraum gewährleistet ist. Die konisch zulaufende Front (7) des Ausschiebekolbens (3) ist der Formgebung des Innendorns (2) und des Außenzylinders (1) im Auslassbereich angepasst und gewährleistet so ein minimales Restvolumen nach dem Auspressvorgang. Figur 7 zeigt die bevorzugte mögliche Bemaßung des rohrförmigen Ausschiebekolbens (3) entsprechend der Dimensionierung des Innendorns (2) nach Figur 5.

Figur 8 gibt eine Perspektivansicht des Außenzylinders (1) wieder, Figur 9 zeigt eine Halbschalendarstellung zur Verdeutlichung der Formgebung des Innenbereichs. Auch hier ist der innere Auslassbereich (8) konisch zulaufend gestaltet und der Formgebung des Innendorns (2) angepasst. Der Austrittsflansch (9) ist die Anschlussstelle für den Massedruck- und Massetemperaturfühler, sowie für den Mikrospritzkopf (4) (vgl. Fig. 3). Zur besseren Handhabung beim Anfahren der Vorrichtung kann zwischen Außenzylinder und Spritzkopf noch ein (beheizter) Bypass zwischengeschaltet sein (nicht dargestellt). Die Maßangaben für den Außenzylinder (1) dieses Ausführungsbeispiels ergeben sich vorzugsweise aus Figur 10.

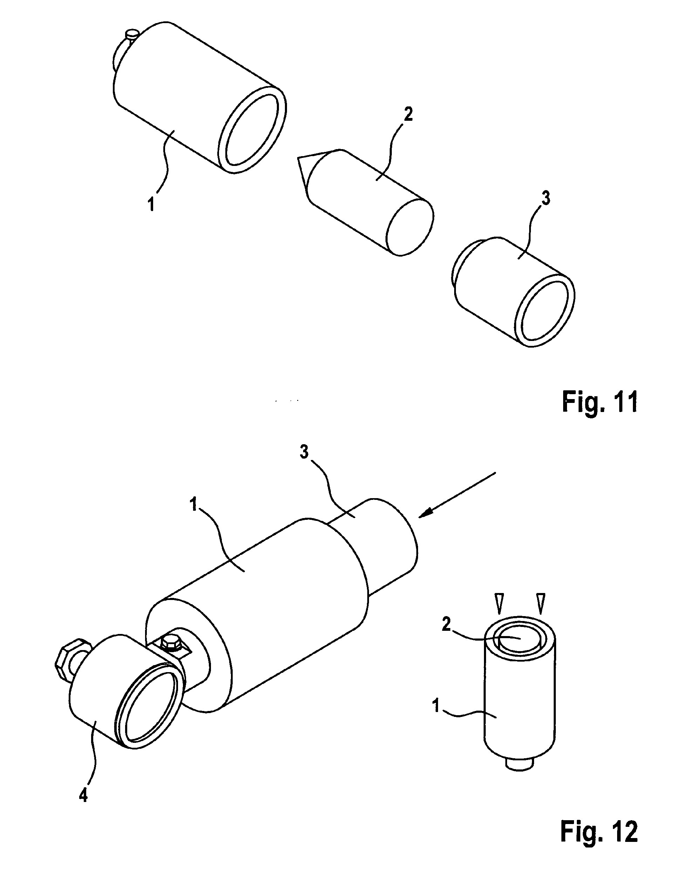

Durch den modularen Aufbau des Extruders aus ineinander gesetzten Einzelkomponenten, wie in Figur 11 dargestellt, ergeben sich im Betrieb verschiedene Vorteile. So kann der Extruder, beispielsweise zur Reinigung, sehr einfach zerlegt werden, indem Innendorn (2) und Ausschiebekolben (3) aus dem Au-βenzylinder (1) gezogen werden können. Auch können für einen Parallelbetrieb, wie in Figur 12 dargestellt, Außenzylinder (1) und Innendorn (2) vom Spritzkopf (4) abgenommen und der Zwischenraum neu mit Granulat befüllt werden, während parallel ein zweites Paar Außenzylinder/Innendorn (12) am Spritzkopf (4) angesetzt ist und mittels Ausschiebekolben (3) Extrudat produziert wird.

In einem alternativen Betriebsmodus kann der erfindungsgemässe Extruder in einer ersten Prozessstufe ohne Spritzkopf und mit verschlossenem Austrittsflansch durch Aufheizen und Pressen von Granulat zum Herstellen von rohrförmigen und beispielsweise zusätzlich eingefärbten Material-Kerzen verwendet werden. Diese so geformten, auf Vorrat produzierbaren Material-Kerzen können dann mit der gleichen Vorrichtung und nachgeschaltetem Spritzkopf zu hochpräzisen strangförmigen Gütern weiterverarbeitet werden (Prinzip "Schmelzkleberpistole").

Der eigentliche Prozess zur Herstellung des strangförmigen Gutes kann durch das dadurch erreichbare sehr schnelle und einfacher zu handhabende Befüllen des Extruders mit dem polymeren Werkstoff noch deutlich schneller und effizienter gestaltet werden.

Mit den in den Figuren 5, 7 und 10 angegebenen Dimensionen des Ausführungsbeispiels liegt das bevorzugte Polymer-Füllvolumen bei ca. 225 cm³. Unter Beibehaltung einer kompakten Baulänge kann das Füllvolumen durch Vergrößerung des Zylinder- und Kolbendurchmessers je nach Anwendung angepasst werden. Zum Beispiel sind bei der Extrusion von Schläuchen mit einem Gewicht von kleiner/gleich 1g/m und einer Materialdichte von 1g/cm³ mit einer Füllung mehr als 200m Mikroschlauch herstellbar. Bei deutlich kleineren Metergewichten des zu fertigenden Mikroschlauches wird mit dem gegebenen nutzbaren Auspressvolumen die mögliche Fertigungslänge pro Füllung entsprechend noch größer. Durch die geringen Restvolumina (z.B. noch optimiert durch das Anschrägen des Ausschiebekolbens zum Austrittbereich) verbleiben nur wenige Prozent (einige cm³) Material ungenutzt im Extruder.

Gegenüber den in Figur 1 und 2 dargestellten konventionellen Vorrichtungen zeichnet sich der erfindungsgemäße Extruder durch eine kompakte, mechanisch äußerst stabile Bauweise aus, die ohne materialspezifische Schneckenförderung oder aufwändige Führungselemente (z.B. "guide rods") auskommt. Allein durch entsprechende Dimensionierung der Einzelkomponenten kann der Extruder ohne besonderen Konstruktionsaufwand auf kleinste Extrudatdimensionen und minimale Schmelzegutmengen angepasst werden. Damit ist auch erreicht, dass die Verweilzeiten im Schmelzezustand sehr kurz gehalten werden und bereits dadurch Materialschädigungen des Schmelzguts reduziert bzw. ausgeschlossen werden können.

Durch räumlich im Extruder verteilt angeordnete Heizelemente und Thermosensoren, die individuell über die komplette Verfahrenslänge graduell angesteuert und auf das optimale Temperaturprofil des jeweiligen Schmelzegutes angepasst werden können, kann die thermische Belastung des polymeren Werkstoffes im Extruder zudem weiter minimiert werden. Insbesondere bei thermisch sensitiven Polymeren mit nur sehr schmalen Prozesstemperaturfenstern ist dies für die Herstellung von dünnwandigen Extrudaten sehr vorteilhaft.

Durch die Optimierung des polymeren Fliessverhaltens in Funktion von Druck, Temperatur und Prozessvolumen mittels zuvor beschriebener Maßnahmen ergibt sich - insbesondere in Verbindung mit der Erfassung des Drucks der Schmelzemasse als Stellgröße zur Vortriebsregelung des Ausschiebekolbens - ein nahezu pulsationsfreies Austreten der Schmelzemasse. Damit sind Schwankungen in den Extrudatabmessungen im Wesentlichen nur bedingt durch die molekularen Parameter des eingesetzten Werkstoffs. Die vorgegebenen Toleranzwerte der erzeugten Mikroschläuche können somit in engen Grenzen eingehalten werden. Ausschuss wird damit weitgehend vermieden, der Prüfaufwand zur Qualitätssicherung kann deutlich reduziert werden.

Da die verschiedenen Steuerungsvorgänge (Regelung des Auspressvorgangs usw.) weitgehend automatisiert werden können, ergeben sich auch bei Einsatz verschiedener Materialen sehr kurze Rüst- und Einfahrzeiten. Aufgrund der einfachen Bedienung des Extrusionsprozesses und den im Vergleich äußerst kompakten Abmessungen des Extruders, sind im Betrieb gegenüber einer konventionellen Extrusionslinie weniger Personal- und Zeitaufwand und nur ein geringer Platzbedarf einzusetzen. Der Extruder kann praktisch in jeder beliebigen räumlichen Lage eingesetzt werden. Insgesamt fallen bei Einsatz des erfindungsgemäßen Extruders deutlich geringere Personal-, Unterhalts- und Investitionskosten an.

## Patentansprüche

1. Vorrichtung zur Extrusion von strangförmigen Gütern aus thermoplastischen oder elastomeren Werkstoffen, mit einem Innenvolumen zur Befüllung mit Polymer-Rohmaterial, Heizelementen zum Aufschmelzen des Polymer-Rohmaterials im Innenvolumen, Mitteln zum Auspressen des so gewonnenen Schmelzeguts in einen Auslassbereich, der über einen Auslasskanal mit einem Spritzkopf (4) verbunden ist,
**dadurch gekennzeichnet,**
**dass** das Innenvolumen als Zwischenraum zwischen einem Außenzylinder (1) und einem zylinderförmigen Innendorn (2) gebildet wird, wobei Außenzylinder (1) und Innenzylinder (2) koaxial zueinander angeordnet sind und als Mittel zum Auspressen des Schmelzeguts ein rohrförmiger Ausschiebekolben (3) vorgesehen ist, der in seinen Abmessungen dem Innenvolumen dichtend angepasst ist.

2. Vorrichtung nach Anspruch 1,
**dadurch gekennzeichnet,**
**dass** das Innenvolumen im Auslassbereich zum Austrittskanal hin konisch zusammenläuft, indem in diesem Bereich die Innenseite des Außenzylinders (1) eine konische Form (8) aufweist und der zylinderförmige Innendorn (2) in diesem Bereich (5) entsprechend kegelförmig ausgebildet ist.

3. Vorrichtung nach Anspruch 2,
**dadurch gekennzeichnet,**
**dass** im konisch zusammenlaufenden Bereich des Innenvolumens auf der Innenwandung (8) des Außenzylinders (1) oder dem kegelförmig zulaufenden Bereich (5) des Innendorns (2) Oberflächenstrukturen (6) - z.B. rautenförmige Erhebungen - vorhanden sind, die eine Durchmischung des Schmelzeguts während des Auspressvorgangs bewirken.

4. Vorrichtung nach Anspruch 1, 2 oder 3,
**dadurch gekennzeichnet,**
**dass** der rohrförmige Ausschiebekolben (3) zum Auslassbereich eine konische Verjüngung (7) aufweist.

5. Vorrichtung nach einem der vorangehenden Ansprüche,
**dadurch gekennzeichnet,**
**dass** insbesondere am Austrittsflansch des Extruders mindestens ein Sensor zur Messung des Drucks des Schmelzeguts vorhanden ist.

6. Vorrichtung nach Anspruch 5,
**dadurch gekennzeichnet,**
**dass** Mittel zur Erfassung der Position des Ausschiebekolbens (3) vorhanden sind, sowie Mittel zur Regelung des Kolbenvortriebs in Abhängigkeit vom gemessenen Druck im Schmelzegut.

7. Vorrichtung nach einem der vorangehenden Ansprüche,
**dadurch gekennzeichnet,**
**dass** Mittel vorhanden sind zum Abpumpen vorhandener Luft im Innenvolumen nach Befüllung mit Polymer-Rohmaterial.

8. Vorrichtung nach einem der vorangehenden Ansprüche,
**dadurch gekennzeichnet,**
**dass** zum Aufschmelzen des Polymer-Rohmaterials Heizelemente, z.B. Heizpatronen, räumlich verteilt im Innendorn (3) eingesetzt sind und/oder Heizelemente, z.B. Heizbänder (10), nebeneinander auf der Außenmantelfläche des Außenzylinders (1) angeordnet sind.

9. Vorrichtung nach Anspruch 5,
**dadurch gekennzeichnet,**
**dass** die Heizelemente individuell oder in mehreren Gruppen mittels entsprechend angebrachter Thermosensoren und nachgeschalteten Regeleinheiten regelbar sind.

10. Verwendung der Vorrichtung nach einem der Ansprüche 1 bis 9 zur Herstellung von entsprechend dem Innenvolumen vorgeformten Material-"Kerzen" für eine schnellere und einfacherere Handhabung des Polymer-Rohmaterials beim Befüllen des erfindungsgemässen Extruders für den eigentlichen Fertigungsschritt "Extrusion des strangförmigen Gutes".
